# EUROPEAN PATENT APPLICATION

(11) **EP 2 397 197 A1**
(43) Date of publication of application: **21.12.2011**
(21) Application number: 10166129.6
(22) Date of filing: 16.06.2010
(51) Int. Cl.: A63F 3/00, A63F 9/00, A63F 9/24

(54) **Tabletop game apparatus**

(71) Applicant: LudoWaves Oy, 90570 Oulu (FI)
(72) Inventor: Portin, Jyrki, 90650, Oulu (FI)
(74) Representative: Pykälä, Timo Tapani

(57) **Abstract**

A tabletop game apparatus (108) for tabletop games (100) such as board games is described. The tabletop game apparatus (108) includes interface means (112) for exchanging data with an object of a tabletop game (108); and processing means (110) for utilizing the data in the tabletop game (100).

## Description

### Field

The invention relates to a tabletop game apparatus, i.e. an electronic apparatus usable in connection with a tabletop game, to an object of the tabletop game, and to a tabletop game.

### Background

'Tabletop game' refers to board games, card games, dice games, miniature war games, tile-based games, and other games that may be played on a table or the like. This term distinguishes over electronic video games. Both types of games have their pros and cons. Tabletop games should be developed further in order to increase their gaming value.

### Brief description

The present invention seeks to provide an improved tabletop game apparatus, an improved object of a tabletop game, and an improved tabletop game.

According to an aspect of the present invention, there is provided a table game apparatus as specified in claim 1.

According to another aspect of the present invention, there is provided an object of a tabletop game as specified in claim 14.

According to another aspect of the present invention, there is provided a tabletop game as specified in claim 15.

### List of drawings

Embodiments of the present invention are described below, by way of example only, with reference to the accompanying drawings, in which
Figure 1 illustrates an embodiment of a tabletop game;
Figures 2 and 3 illustrate embodiments of a distributed tabletop game;
Figures 4, 5 and 6 illustrate embodiments having an active area;
Figures 7, 8, 9 and 10 illustrate embodiments wherein data is exchanged with objects of the tabletop game;
Figure 11 illustrates an embodiment relating to power consumption of game accessories;
Figures 12 and 13 illustrate embodiments relating to the use of machine-readable data;
Figure 14 illustrates an embodiment of the tabletop game; and
Figure 15 illustrates an embodiment of the tabletop game apparatus.

### Description of embodiments

The following embodiments are exemplary. Although the specification may refer to "an" embodiment in several locations, this does not necessarily mean that each such reference is to the same embodiment(s), or that the feature only applies to a single embodiment. Single features of different embodiments may also be combined to provide other embodiments. It is to be noted that as only the imagination of the game designer sets the limit for the specifications of the tabletop games, the following embodiments are intended to illustrate, not to restrict, the invention. Such development may require extra changes to an embodiment, and, consequently, all words and expressions should be interpreted broadly.

The connections shown in Figures are logical connections; the actual physical connections may be different. Interfaces between the various parts may be implemented with suitable interface technologies, such as a message interface, a method interface, a sub-routine call interface, a block interface, wired interface, wireless interface, or any means enabling communication between functional units. It should be appreciated that the apparatuses may comprise other parts. However, such other parts are irrelevant to the actual invention and, therefore, they need not be discussed in more detail here. It is also to be noted that although some parts are depicted as separate ones, some of them may be integrated into a single physical part.

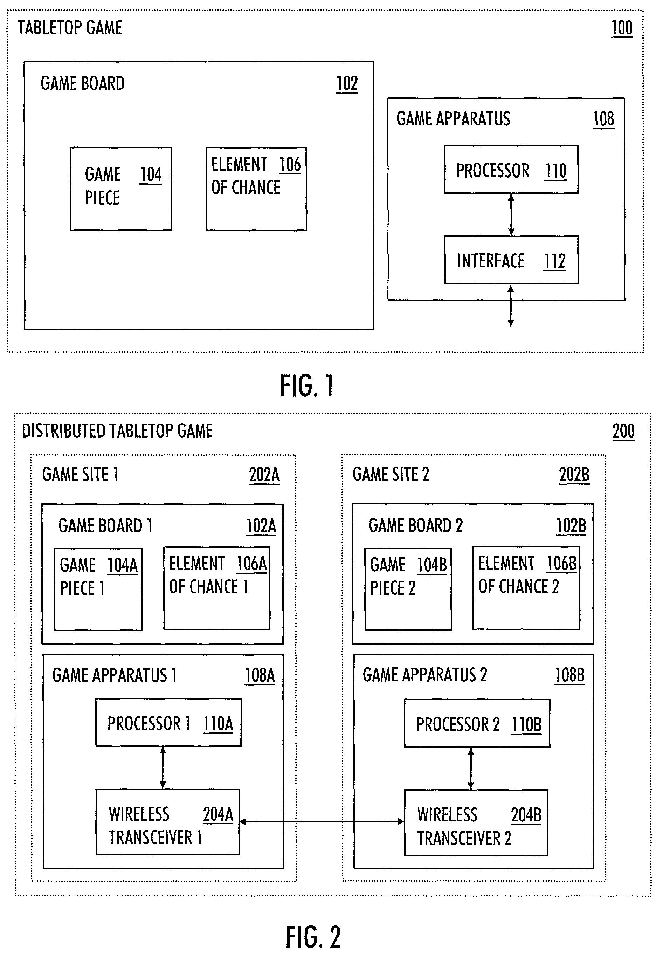

Figure 1 illustrates an embodiment of a tabletop game 100. The tabletop game 100 may be a board game. Famous board games are Monopoly®, Carcassonne®, Trivial Pursuit®, and Scrabble®, for example.

Game pieces 104 are placed, removed, or moved on a game board 102 according to a set of predetermined rules in the game 100. There may be a number of game pieces 104, and they are not necessary all alike. Game pieces 104 may also be called pawns, movers, bits, tokens, or counters, for example. Traditionally, game pieces 104 are made out of wood, but also other suitable materials or a mix of materials may be used: plastic, metal, carton, bone, or any other natural or synthetic material. The game board 102 forms the surface on which the game is played. The game board 102 is usually flat, but it may also have a three dimensional surface. The game board 102 may be made out of plastic, carton, paper, wood, or any other suitable material, natural or synthetic, or a combination of different materials. The game board 102 is usually one piece quadrilateral board, but it may be shaped to any shape in order to accommodate the virtual world created by the game designer. Additionally, the game board 102 may be formed from a number of pieces, the pieces may have different shapes, and, as a consequence, the layout of the game board 102 may change from game to game, or even while the game is being played. The game board 102 may even be virtual: the picture of the game board 102 may be projected onto a board, table or wall, for example. A video projector may be used to take a video signal and project the corresponding image (illustrating the game board) on a projection screen (such as the board, table or wall) using a lens system. Any suitable projection technology may be used, including LCD (Liquid Crystal Display), DLP (Digital Light Processing) and LED (Light-Emitting Diode) technologies. The video projector may communicate with a processor 110 of a tabletop game apparatus 108; the video projector may even be integrated into the tabletop game apparatus 108.

The success in a tabletop game 100 may be based primarily upon luck and/or strategy. Some tabletop games 100 are almost entirely deterministic, while some tabletop games are more stochastic. Usually, a tabletop game 100 involves both luck and strategy. Besides luck and strategy, diplomacy may also affect the outcome of the game, i.e. the ability of the player to make deals with other players.

An element of chance 106 may be used to bring the element of luck into the game. The element of chance may be a dice. Usually a six-sided dice is used, although any number of sides can be used, an extreme example being a 100-sided dice. In its simplest form, the rolling of the dice determines how many steps a player moves his/her game piece 104, but, basically, the dice may determine the outcome of any resource handled by the player, such as how the forces of the player fare in a battle, for example. The element of chance 106 may also refer to a shuffled deck of cards, a spinner, a timer, or any other source of randomness.

The tabletop game 100 may have some or all of the above described game accessories. The tabletop game 100 may also have additional accessories that have not been described. In further embodiments described later on, some of such additional game accessories are described. It is also the noted that the basic game accessories described so far may be enhanced in a number of ways described later on: game board 102, game pieces 104, and/or elements of chance 106 may be equipped with suitable electronics, for example.

The tabletop game 100 also comprises a tabletop game apparatus 108. The tabletop game apparatus 108 comprises an interface 112 configured to exchange data with an object of the tabletop game 100, and a processor 110 configured to utilize the data in the tabletop game 100. The tabletop game apparatus 108 enables more interesting experiences for the players and may help the players to count points or money, resources or whatever are used to measure the success of the players in the tabletop game 100. The described tabletop game 100 may also provide new experiences in social gaming for the players. The tabletop game 100 may also give game experiences for the players in a multi site live gaming environment.

Traditional board games have been very popular for many decades. The biggest markets have been Germany, France and the rest of the Europe and also the USA. Traditionally, the board games have been built from carton board, cards, dice and plastic pawns. Calculating points, money or resources for each player have required either a good memory from the players or bookkeeping with pen and paper, and the plastic pawns tend to drop off from the game board 102. The commercial advantages of traditional games have been low cost, and good availability of the materials. Main advantages of traditional board games are the social gaming, game societies, low design costs, low purchasing costs, and ease of playing. On the other hand, the video/television-games, computer games (played locally or available through Internet servers), mobile games and portable electronic games have become very popular during the recent 15-20 years. The problem with most of these games is the fact that many games are designed so that the player plays them alone. Also the development costs are much higher than for the tabletop games. The tabletop game 100 described in this application combines some elements of these very different gaming environments into a totally new package providing a novel gaming experience.

The interface 112 may be any suitable device capable of exchanging data. The interface 112 may be a suitable communication bus, serial or parallel, operating in a wireless or wired fashion, for example. The interface 112 may be directly coupled with the objects of the tabletop game 100, and/or there may be a telecommunications connection between the interface 112 and the objects of the tabletop game 100.

The term 'processor' 110 refers to a device that is capable of processing data. The processor 110 may comprise an electronic circuit(s) implementing the required functionality, and/or a microprocessor(s) running computer program instructions implementing the required functionality. When designing the implementation, a person skilled in the art will consider the requirements set for the size and power consumption of the tabletop game apparatus 100, the necessary processing capacity, production costs, and production volumes, for example.

In general, the tabletop game apparatus 108 is an electronic device, implemented by processors, microprocessors, digital signal processors, programmable circuits, field-programmable gate arrays (FPGA), controllers, application-specific integrated circuits (ASIC), integrated circuits (IC), electronic components, electromechanical components, electronic connectors etc. so that the implementation may comprise hardware alone or a combination of hardware and software.

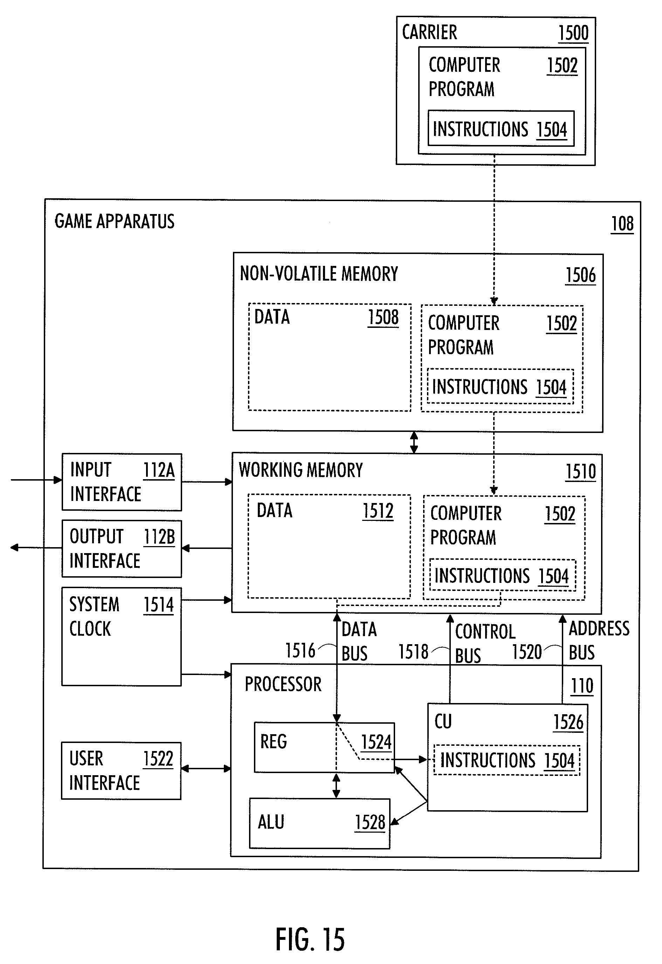

Figure 15 illustrates the tabletop game apparatus 108 implemented as an electronic digital computer, possibly in a miniature size.

The tabletop game apparatus 108 may comprise, besides the processor 110, a working memory 1510, and a system clock 1514. The interface 112 is illustrated as an input interface 112A and an output interface 112B. Furthermore, the tabletop game apparatus 108 may comprise a number of peripheral devices. In Figure 15, some peripheral devices are illustrated: a non-volatile memory 1506 and a user interface 1522 (such as a pointing device, a keyboard, a display, a touch screen etc.). Naturally, the tabletop game apparatus 108 may comprise a number of other peripheral devices, not illustrated here for the sake of clarity.

The system clock 1514 constantly generates a stream of electrical pulses, which cause the various transferring operations within the tabletop game apparatus 108 to take place in an orderly manner and with specific timing.

Depending on the processing power needed, the tabletop game apparatus 108 may comprise several (parallel) processors 110, or the required processing may be distributed amongst a number of separate tabletop game apparatuses 108 as will be illustrated later on. The tabletop game apparatus 108 may be based on a laptop computer, a touch pad computer, a mobile phone, or some other existing product, or the tabletop game apparatus 108 may be especially designed to the role of the tabletop game controller, in which case its functions and structure may be fully optimized in view of the costs, for example.

The processor 110 may implement functions of a central processing unit (CPU) on an integrated circuit. The CPU is a logic machine executing computer program 1502 instructions 1504. The program instructions 1504 may be coded as a computer program 1502 using a programming language, which may be a high-level programming language, such as C, or Java, or a low-level programming language, such as a machine language, or an assembler. The CPU may comprise a set of registers 1524, an arithmetic logic unit (ALU) 1528, and a control unit (CU) 1526. The control unit 1526 is controlled by a sequence of program instructions 1504 transferred to the CPU from the working memory 1510. The control unit 1526 may contain a number of microinstructions for basic operations. The implementation of the microinstructions may vary, depending on the CPU design. The processor 110 may also have an operating system (a general purpose operating system, a dedicated operating system of an embedded system, or a real-time operating system, for example), which may provide the computer program 1502 with system services.

There may be three different types of buses between the working memory 1510 and the processor 110: a data bus 1516, a control bus 1518, and an address bus 1520. The control unit 1526 uses the control bus 1518 to set the working memory 1510 in two states, one for writing data into the working memory 1510, and the other for reading data from the working memory 1510. The control unit 1526 uses the address bus 1520 to send to the working memory 1510 address signals for addressing specified portions of the memory in writing and reading states. The data bus 1516 is used for transferring data 1512 from the working memory 1510 to the processor 110 and from the processor 110 to the working memory 1510, and for transferring the instructions 1504 from the working memory 1510 to the processor 110.

The working memory 1510 may be implemented as a random-access memory (RAM), where the information is lost after the power is switched off. The RAM is capable of returning any piece of data in a constant time, regardless of its physical location and whether or not it is related to the previous piece of data. The data may comprise data 1512 relating to the control of the tabletop game 100, any temporary data needed during the processing, computer 1502 program instructions 1504 etc.

The non-volatile memory 1506 retains the stored information even when not powered. Examples of non-volatile memory include read-only memory (ROM), flash memory, magnetic computer storage devices such as hard disk drives, and optical discs. Data 1508 stored in the non-volatile memory 1506 may comprise data relating to the tabletop game 100, such as rules of the tabletop game 100, data relating to the players of the tabletop game 100, data relating to the situation of an ongoing but interrupted tabletop game 100 etc. The data 1508 may have been brought into the non-volatile memory 1506 via a memory device (such as a memory card, an optical disk, or any other suitable non-volatile memory device) or via a telecommunications connection (via Internet, or another wired/wireless connection).

An embodiment may provide a computer-readable medium 1500 comprising computer 1502 program instructions 1504 which may be loaded into a memory 1506/1510 of the tabletop game apparatus 108. The memory 1506/1510 and the computer program 1502 instructions 1504 are configured to, with the processor 110, cause the tabletop game apparatus 108 to perform: exchange data with an object of the tabletop game 100; and utilize the data in the tabletop game 100. The computer program 1502 may be in source code form, object code form, or in some intermediate form. The computer program 1502 may be stored in the computer-readable medium 1500, or carrier, which may be any entity or device capable of carrying the program to the tabletop game apparatus 108. The carrier may be implemented for example as follows: the computer program 1502 may be embodied, besides computer-readable medium, on a computer-readable storage medium, on a record medium, stored in a computer memory, embodied in a read-only memory, carried on an electrical carrier signal, carried on a telecommunications signal, and/or embodied on a software distribution medium. In some jurisdictions, depending on the legislation and the patent practice, the carrier may not be the telecommunications signal.

Figure 15 illustrates that the computer-readable medium 1500 may be coupled with the tabletop game apparatus 108, whereupon the program 1502 comprising the program instructions 1504 is transferred to the non-volatile memory 1506. The program 1502 with its program instructions 1504 may be loaded from the non-volatile memory 1506 in the working memory 1510. During running of the program 1502, the program instructions 1504 are transferred via the data bus 1516 from the working memory 1510 to the control unit 1526, wherein usually a portion of the instructions 1504 resides and controls the operation of the tabletop game apparatus 108.

There are many ways to structure the program 1502. The operations of the program may be divided into functional modules, subroutines, methods, classes, objects, applets, macros, etc., depending on the software design methodology and the programming language used. In modern programming environments, there are software libraries, i.e. compilations of ready made functions, which may be utilized by the program for performing a wide variety of standard operations.

It should be noted that such a seemingly complex tabletop game apparatus 108 as illustrated in Figure 15 may be produced relatively cheaply provided that it is tailored to meet the requirements of the gaming and mass-production.

Additionally, such a tabletop game apparatus 108 allows the game manufacturer to offer downloadable games as tabletop games 100, and upgrades for different game levels. Further, it allows new features to be offered and downloaded from a game server, or playing the games from the server, where all other tabletop gamers are connected, thus allowing team games in tabletop games 100. Also, additional tabletop games 100 may be purchased in a memory card and loaded into the tabletop game apparatus 108.

Now that some basic concepts of the tabletop game 100 and the tabletop game apparatus 108 have been described, some further embodiments may be presented.

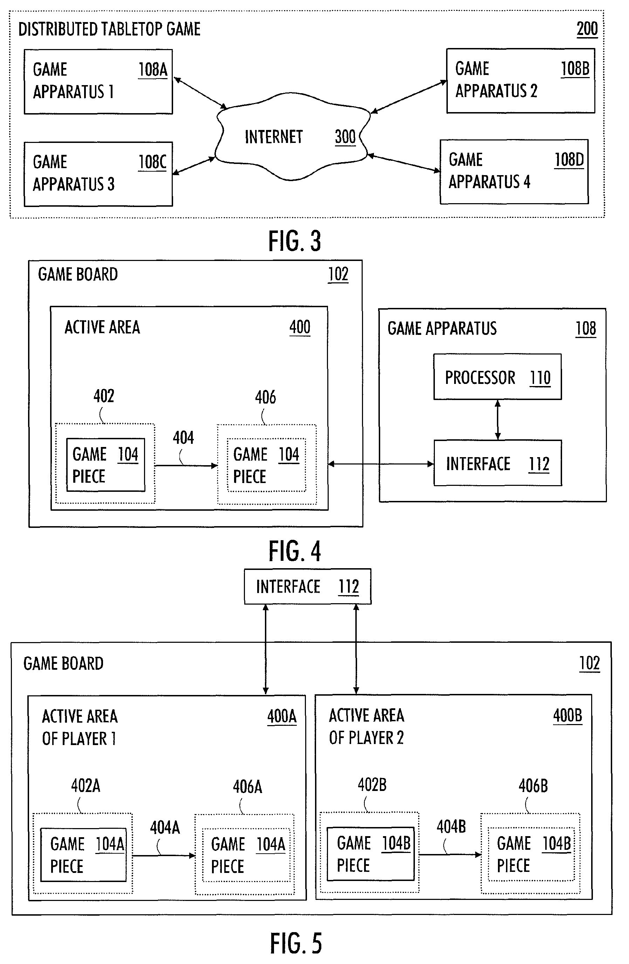

Figures 2 and 3 illustrate embodiments of a distributed tabletop game 200.

As shown in Figure 2, the tabletop game may be distributed among a number of game sites 202A, 202B. Each game site 202A may be separated from another game site 202B by a small or large distance, i.e. each game site 202A, 202B is located in a different geographic location. The geographic locations 202A, 202B may be, for example, at the opposite ends of a table, at different corners of a room, in different rooms of a house, in different houses, in different neighbourhoods, in different towns, in different countries, in different continents etc. The tabletop game apparatuses 108A, 108B may comprise wireless transceivers 204A, 204B configured to exchange the data with each other. The processors 110A, 110B of the tabletop game apparatuses 108A, 108B may further be configured to utilize the data for managing the tabletop game distributed among the two or more tabletop game apparatuses 108A, 108B. In Figure 2, the board game players and the teams of players may play against each other regardless of their location.

As illustrated in Figure 2, the game accessories such as game boards 102A, 102B, game pieces 104A, 104B, elements of chance 106A, 106B may be specific to each game site 202A, 202B.

Figure 3 illustrates that the wireless transceiver 204A, 204B of each game apparatus 108A, 108B, 108C, 108D may further be configured to communicate over the Internet 300 in order to exchange the data between the tabletop game apparatuses 108A, 108B, 108C, 108D. However, the wireless transceivers 204A, 204B may additionally, or alternatively, be further configured to communicate over a license-free radio frequency band in order to exchange the data between the tabletop game apparatuses 108A, 108B, 108C, 108D. The wireless transceivers 204A, 204B may operate according to Bluetooth®, WLAN (Wireless Local Area Network), Zigbee, RFID (RadioFrequency Identification), NFC (Near Field Communication), 2G, 3G, 4G, GSM (Global System for Mobile Communications), WCDMA (Wideband Code Division Multiple Access), or according to any other suitable standard/non-standard/proprietary wireless communication technique.

Suitable communication protocols may be utilized as required, in order to realize point-to-point or point- to multipoint connections. National limitations may apply as regards to the use of the license-free frequency bands. The wireless transceivers 204A, 204B may be configured accordingly for each country. With typical low power radio frequency communication it is possible to reach a range extending beyond several kilometres, or even more. With the same concept, the players who have a radio amateur license, may use their equipment for connections of the tabletop games 100 in any radio amateur frequency bands.

Figures 4, 5 and 6 illustrate embodiments having an active area 400.

Basically, the active area 400 is an electronically controlled area, possibly located on the game board 102, or coupled with the game board 102. The purpose of the active area 400 is to control and/or provide control information regarding various game accessories such as game pieces 104 and/or elements of chance 106. Such control and control information may describe the relation of the game accessory to the game situation. The active area 400 may be implemented by placing active or passive sensors into the game board 102. Such sensors may also be placed in the game pieces 104 and/or elements of chance 106. The active area 400 may also be implemented by placing resistive or capacitive reader pads into the game board 102. Also techniques used for touch-sensitive screens may be used to implement the active area 400.

In the embodiment illustrated in Figure 4, the interface 112 is further configured to be coupled with the active area 400 of the game board 102 for exchanging data with the active area 400, and the processor 110 is further configured to utilize the data for managing the tabletop game 100. As shown in Figure 4, the interface 112 may further be configured to receive data describing position 402, 406 and/or move 404 of the game piece 104 from the active area 400, and the processor 110 may further be configured to utilize the data describing the position 402, 406 and/or move 404 of the game piece 104 for managing the tabletop game 100. In Figure 4, the game piece 104 is moved 404 from the first position 402 to the second position 406.

Figure 5 illustrates that the active area may be player specific, i.e. each player has his/her own active area 400A, 400B. The processor 110 may further be configured to recognize game piece 104A, 104B move 404A, 404B by a player on the basis of the data describing the position 402A, 406A, 402B, 406B and/or move 404A, 404B of the game piece 104A, 104B.

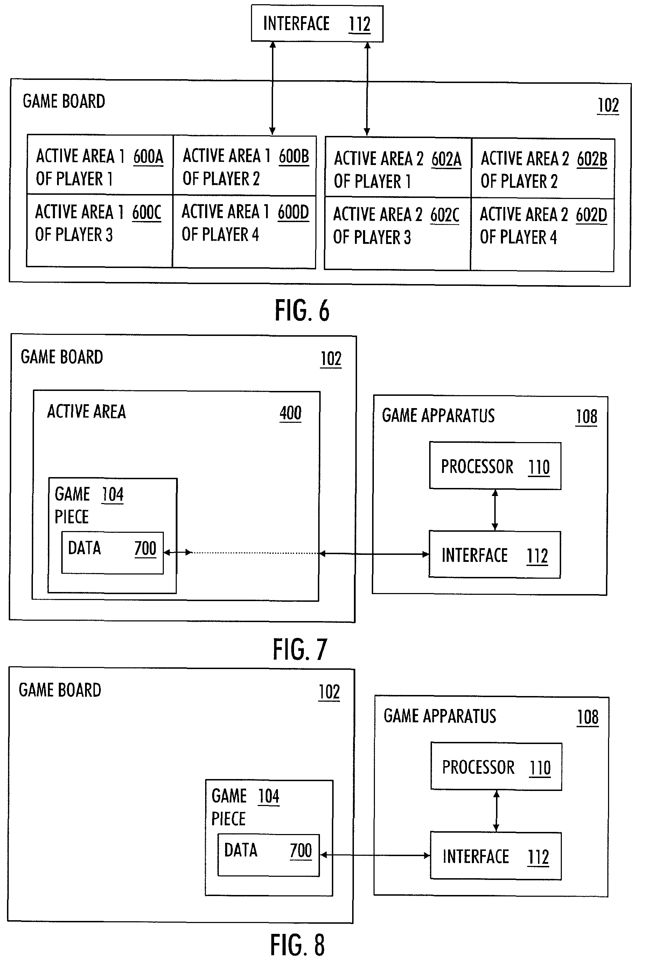

Figure 6 illustrates that each active area may be divided into player specific active areas: active area 1 is divided into four player specific active areas 600A, 600B, 600C, 600D, and active area 2 is divided also into four player specific active areas 602A, 602B, 602C, 602D. The active area may be divided into any number, which may at the same time be the maximum number of players for the tabletop game 100.

The active area 400 may be implemented in such a manner that the tabletop game apparatus 108 measures the active area(s) 400 using input pins of the processor 110. The software running in the processor 110 may read the active area 400 state and make logical calculations according to the designed software and game logic. As each active area 400A, 400B may be specific for one player only, the software may logically know which player has placed his/her game piece 104 into this active area, which helps the game design and reduces the amount of additional active components. In this aspect, when the player 1 puts his/her game piece 104 into a player specific area in active area 1, the software notifies and records this. When the player 1 moves the game piece 104 from this location to a player specific area in active area 2, the software notifies this and knows it is the player 1 who has made such move in the tabletop game 100.

Figures 7, 8, 9 and 10 illustrate embodiments wherein data is exchanged with objects of the tabletop game 100. The interface 112 may further be configured to wirelessly exchange data with an object of the tabletop game 100 handled by a player of the tabletop game 100, and the processor 110 is further configured to utilize the data for managing the tabletop game 100. Such game objects may include the game piece 104 and/or the element of chance 106.

Figures 7 and 8 illustrate embodiments relating to the game piece 104. The game piece 104 may be provided with machine-readable data 700. Such machine-readable data 700 may be profile data, which may be data determining a feature relating to the game piece 104 in the context of the tabletop game 100. The interface 112 may further be configured to exchange profile data 700 with the game piece 104, and the processor 110 may further be configured to utilize the profile data 700 for managing the tabletop game 100. In Figure 7, the profile data 700 may be transferred indirectly between the game piece 104 and the interface 112 via the active area 400, whereas in Figure 8, the profile data 700 may be transferred directly, in a wireless manner, for example, between the game piece 104 and the interface 112. In order to realize such intelligent game pieces 104, suitable electronics may be embedded into them 104. A very low energy integrated transceiver may be implanted into the game pieces 104. Any suitable memory type, such as a solid state memory, may be used to store the machine-readable data 700. The game piece 104 may activate when it is placed on the game board 102 and/or on the active area 400, providing the activity and interaction that depends from the actions by the players and the game logic programmed into the tabletop game apparatus 108.

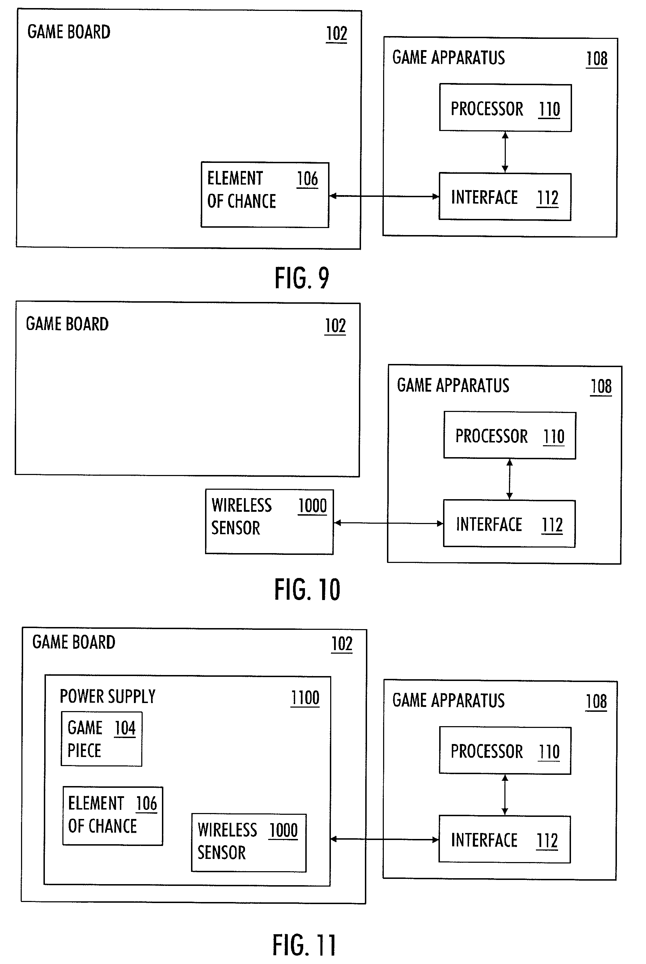

Figure 9 illustrates an embodiment relating to the element of chance 106. The interface 112 may further be configured to wirelessly exchange data with the element of chance 106, and the processor 110 may further be configured to utilize the data exchanged with the element of chance 106 for managing the tabletop game 100. In this way, a wireless dice, used for generating random numbers or other symbols, may be implemented. In order to implement the element of chance 106, suitable electronics, such as various sensors, accelerometers, RFID, NFC, barcode readers/writers, for example, and communication electronics may be embedded into the element of chance 106, and into the interface 112, and possibly also into the game board 102 and/or active area 400.

Figure 10 illustrates an embodiment relating to a wireless sensor 1000. The interface 112 may further be configured to wirelessly exchange data with the wireless sensor 1000 of the tabletop game 100 handled by a player of the tabletop game 100, and the processor 110 may further be configured to utilize the data in the tabletop game 100. The wireless sensor 1000 may be of the type used in Nintendo Wii®, which may be a handheld pointing device detecting movement in three dimensions by the use of motion sensors such as accelerometers. The accelerometer measures its own motion, acceleration, i.e. the rate of change of velocity, and converts the acceleration into an electric signal. Various techniques may be used for measuring acceleration: piezo-resistor technology, micro-machined silicon technology, voice coil technology etc. The implementation of the accelerometer may also be based on other appropriate techniques, for example on a gyroscope integrated into a silicon chip or on a micro vibration switch incorporated into a surface mounting component. The accelerometer may measure the acceleration in one, two or three dimensions. A multi-dimensional measurement may be carried out with a single accelerometer component having a multi-dimensional capability, or two or even three separate accelerometers are applied, each measuring a different dimension.

The wireless sensors 1000 may also include such sensors that the players may wear. For example, in a shooting game, wireless sensors 1000 may be used for determining the position of the gun and the time when the shooting is enabled. When the gun is drawn up in a vertical position, the shooting is enabled. Also, each player may wear a tag determining a target where the opponent should aim for in order to get a score. The wireless sensors 1000 may be integrated into any type of a game controller usable in the tabletop games 100, such game controllers including gamepads, paddles, trackballs, joysticks, throttles, steering wheels, yoke, pedals, keyboard, mouse, mousepad, touch screen, motion sensing, light gun etc.

Figure 11 illustrates an embodiment relating to power consumption of game accessories. The interface 112 may further be configured to be coupled to a component 104, 106, 1000 of the tabletop game 100, and the processor 110 may further be configured to control power consumption of the component 104, 106, 1000 of the tabletop game 100. The game board 102 may include an integrated power supply 1100. The power supply 1100 may comprise an induction loop transmitting energy wirelessly to the game pieces 104, elements of chance 106, and/or wireless sensors 1000 etc. Besides using an induction loop, also other wired/wireless ways of transmitting energy may be used, such as a cable, electromagnetic energy, light energy or wireless energy. The components 104, 106, 1000 may also comprise an independent energy source, such as a battery and/or a solar cell or the like, which may be controlled, switched on and off, for example, by the tabletop game apparatus 108.

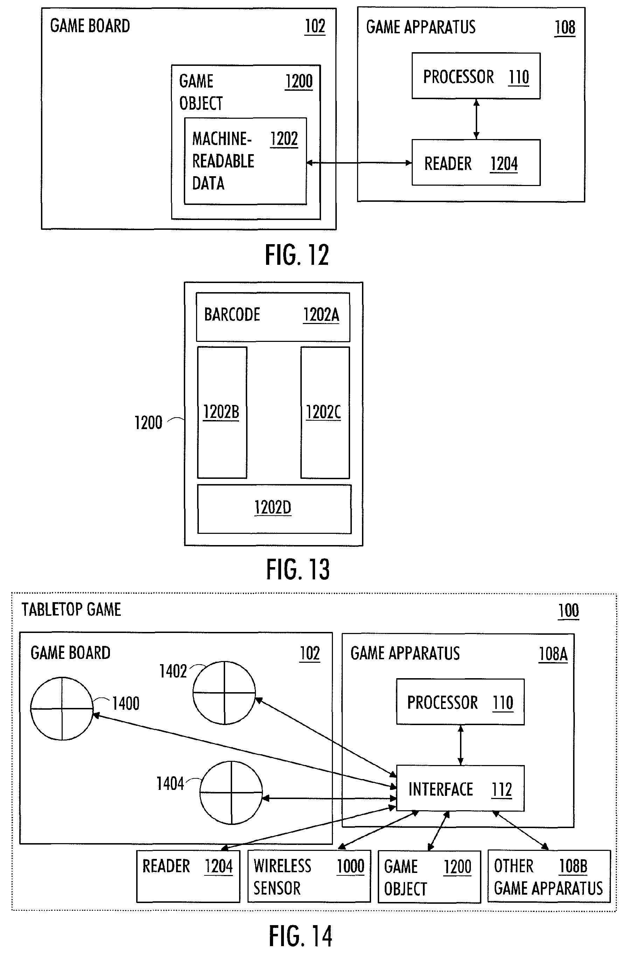

Figures 12 and 13 illustrate embodiments relating to the use of machine-readable data.

As shown in Figure 12, the tabletop game apparatus 108 may comprise a reader 1204 configured to read machine-readable data 1202 relating to the tabletop game 100 from an object 1200 of the tabletop game 100, and the processor 110 may further be configured to utilize the machine-read data 1202 in the tabletop game 100.

Figure 13 illustrates that the object 1200 of a tabletop game 100 readable by the reader 1204 may comprise as the machine-readable data a barcode data 1202A, 1202B, 1202C, 1202D relating to the tabletop game 100 in at least two different places on the surface of the object 1200. A barcode is an optical machine-readable representation of data. A barcode may represent data in the widths (lines) and the spacings of parallel lines, but also other patterns may be used, such as squares, dots, hexagons and other geometric patterns, or other kind of pixel codes. Barcodes may be read by optical scanners called barcode readers. The barcode reader 1204 may be based on the use of a light source (such as a laser and a photodiode, or a CCD (Charge-Coupled Device) reader, or a camera reader. In the tabletop game 100, standard or non-standard barcodes or pixel codes and low cost barcode/pixel readers 1204 may be used to read objects, cards, game pieces 104, elements of chance 106, and other possible materials related to the tabletop game 100.

As shown in Figure 13, the card 1200 may have four places at each side of the card 1200, resulting in eight different barcodes in one card 1200. The cards 1200 may also have other forms: if the cards 1200 are pentagon shaped or heptagon shape, for example, more barcodes may be printed on the cards 1200. This gives many options for a game designer to realize various paying options for the tabletop game 100, for example.

Figure 14 illustrates an embodiment of the tabletop game 100. The tabletop game 100 is a sports game. The game board 102 has training camps 1400, 1402, 1402 that are each split into four active areas (in this example, the maximum number of players in the game is thus four), whereby each training camp 1400, 1402, 1404 has the active area for game pieces 104 of each player. The idea is that each player is as a personal trainee for athletes in three winter sports (biathlon, Nordic combination and speed skating). The initial phase of the game is a training session, whereupon the final phase of the game is entered: the actual competition, i.e. the winter Olympics. Training takes place in the training camps 1400, 1402, 1404, and, in order to get there, each player has to swipe the right training card 1200 with the reader 1204, which results in that a sum of money for the flight ticket is taken from the player's account. By swiping one of the barcodes (that determine durability, force/power, and/or technique) of the training card 1200 with the reader 1204, the player sets what skill the athlete is going to rehearse. When the player makes the right moves with the wireless sensor 1000, the tabletop game apparatus 108A reads the moves and records the training parameters in the memory. After the training is completed, the competition starts. In the competition, the recorded training parameters impact, together with the player's use of the wireless sensor 1000, the athlete taking part in the competition. A summary shows how well the athlete completes the competition and what time each of the athlete reaches. There may also be some additional cards 1200 which may include some bonuses or surprises. Bonuses may be for instance better equipment, and surprises may be a doping card, for example, which makes the athlete to fail in a doping test. As shown in Figure 14, there may be plurality of tabletop game apparatuses 108A, 108B coupled with each other in order to realize a distributed tabletop game 200 as illustrated in Figures 2 and 3.

It will be obvious to a person skilled in the art that, as technology advances, the inventive concept can be implemented in various ways. The invention and its embodiments are not limited to the examples described above but may vary within the scope of the claims.

## Claims

1. A tabletop game apparatus comprising:
interface means for exchanging data with an object of a tabletop game; and
processing means for utilizing the data in the tabletop game.

2. The tabletop game apparatus of claim 1, wherein the interface means comprises a wireless transceiver configured to exchange the data with another tabletop game apparatus, and the processing means is further configured to utilize the data for managing the tabletop game distributed among the tabletop game apparatus and the other tabletop game apparatus.

3. The tabletop game apparatus of claim 2, wherein the wireless transceiver is further configured to communicate over the Internet in order to exchange the data with the other tabletop game apparatus.

4. The tabletop game apparatus of claim 2, wherein the wireless transceiver is further configured to communicate over a license-free radio frequency band in order to exchange the data with the other tabletop game apparatus.

5. The tabletop game apparatus of any preceding claim, wherein the interface means is further configured to be coupled with an active area of a game board for exchanging data with the active area, and the processing means is further configured to utilize the data for managing the tabletop game.

6. The tabletop game apparatus of claim 5, wherein the interface means is further configured to receive data describing position and/or move of the game piece from the active area, and the processing means is further configured to utilize the data describing the position and/or move of the game piece for managing the tabletop game.

7. The tabletop game apparatus of claim 6, wherein the active area is player specific, and the processing means is further configured to recognize game piece move by a player on the basis of the data describing the position and/or move of the game piece.

8. The tabletop game apparatus of any preceding claim, wherein the interface means is further configured to wirelessly exchange data with an object of the tabletop game handled by a player of the tabletop game, and the processing means is further configured to utilize the data for managing the tabletop game.

9. The tabletop game apparatus of any preceding claim, wherein the interface means is further configured to exchange profile data with a game piece, the profile data determining a feature relating to the game piece in the context of the tabletop game, and the processing means is further configured to utilize the profile data for managing the tabletop game.

10. The tabletop game apparatus of any preceding claim, wherein the interface means is further configured to wirelessly exchange data with an element of chance, and the processing means is further configured to utilize the data exchanged with the element of chance for managing the tabletop game.

11. The tabletop game apparatus of any preceding claim, wherein the interface means is further configured to wirelessly exchange data with a wireless sensor of the tabletop game handled by a player of the tabletop game, and the processing means is further configured to utilize the data in the tabletop game.

12. The tabletop game apparatus of any preceding claim, wherein the interface means is further configured to be coupled to a component of the tabletop game, and the processing means is further configured to control power consumption of the component of the tabletop game.

13. The tabletop game apparatus of any preceding claim, wherein the interface means comprises a reader configured to read machine-readable data relating to the tabletop game from an object of the tabletop game, and the processing means is further configured to utilize the machine-read data in the tabletop game.

14. An object of a tabletop game readable by the reader of claim 13, wherein the object comprises as the machine-readable data a barcode data relating to the tabletop game in at least two different places on the surface of the object.

15. A tabletop game comprising the tabletop game apparatus of any preceding claim 1 to 13, and/or the object of claim 14.
